# EUROPEAN PATENT APPLICATION

(11) **EP 0 874 372 A1**
(43) Date of publication of application: **28.10.1998**
(21) Application number: 98101153.9
(22) Date of filing: 23.01.1998
(51) Int. Cl.: H01B 3/40, H01F 6/00

(54) **Insulating material and epoxy adhesive for super low temperature**

(30) Priority: 23.04.1997 JP 106426/97
(71) Applicant: ARISAWA MFG. CO., LTD., Joetsu-shi, Niigata-ken (JP)
(72) Inventor: Ueki, Toru, c/o Arisawa Mfg. Co., Ltd.,, Joetsu-shi, Niigata-ken (JP); Nojima, Kenichi, c/o Arisawa Mfg. Co.,Ltd.,, Joetsu-shi, Niigata-ken (JP)
(74) Representative: Hansen, Bernd, Dr. Dipl.-Chem.

(57) **Abstract**

A super low temperature insulating material and an epoxy adhesive are provided which are excellent in insulating property and adhesive property even in a super low temperature condition. A glass cloth and a polyimide resin film are arranged through an epoxy resin composition into which high molecules having a number average molecular weight of 10,000 or more is mixed by 5% (wt.) or more.

## Description

### BACKGROUND OF THE INVENTION

The present invention relates to an insulating material and epoxy adhesive for a super low temperature with excellent insulating property and adhesive property even at a super low temperature. It also relates to an epoxy adhesive.

In order to maintain and keep a super conductive condition at a super low temperature as in use of a super conductive coil, an insulation ability such as an insulation fracture voltage of an insulating material is important. However, in particular, an adhesive condition between the insulating material and a conductive member is significant.

A glass fiber reinforced composite material composed of a glass fiber and an epoxy resin has been frequently used as a raw material of the insulating material. If this glass fiber reinforced composite material is cooled down to a super low temperature, a phenomenon happens which a crack is generated in the resin portion and the glass fiber reinforced composite material is peeled off. If the glass fiber reinforced composite material is peeled off, then the super conductive material may easily be moved and the super conductive material is vibrated to be heated. It is disadvantageous that a phenomenon happens in which the super conductive condition is broken due to the temperature elevation in accordance with this vibration (a so-called quench phenomenon).

On the other hand, a highly reliable polyimide resin film exhibiting an insulating fracture voltage that is about ten times higher than that of a general insulating material such as a glass fiber reinforced composite material is used as a high performance insulating material. However, this polyimide resin film has a disadvantage that the adhesive property is low.

Accordingly, in the case where the polyimide resin film is bonded with, for example, the conductive material, or in the case where the polyimide resin film is bonded through a glass cloth, a resin such as an epoxy resin having a relatively high adhesive property is used as an adhesive to compensate for the poor adhesive property.

Nevertheless, even with such a structure, a distortion is generated due to a difference in thermal contractibility among the respective materials in a super low temperature range, resulting in insufficient adhesivity. (Incidentally, the bonding is good at a room temperature).

### SUMMARY OF THE INVENTION

In order to solve the above-noted defects, an object of the present invention is to provide a super low temperature insulating material and an epoxy resin adhesive which may effectively exhibit a high insulativity of a polyimide resin film even at a super low temperature.

According to the present invention, there is provided a super low temperature insulating material characterized in that a glass cloth and a polyimide resin film are arranged through an epoxy resin composition into which high molecules having a number average molecular weight of 10,000 or more is mixed by 5% (wt.) or more.

According to another aspect of the invention, there is provided a super low temperature insulating material characterized in that a polyimide resin film is bonded to a glass cloth prepreg formed by impregnating a glass cloth with an epoxy resin composition into which high molecules having a number average molecular weight of 10,000 or more is mixed by 5% (by wt.) or more.

According to still another aspect of the invention, there is provided a super low temperature insulating material characterized in that a glass cloth and a polyimide resin film having a tensile elongation of 80 to 160% at a room temperature are arranged through an epoxy resin composition into which high molecules having a number average molecular weight of 10,000 or more is mixed by 5% (wt.) or more.

According to another aspect of the invention, there is provided a super low temperature insulating material characterized in that a polyimide resin film having a tensile elongation of 80 to 160% at a room temperature is bonded to a glass cloth prepreg formed by impregnating a glass cloth with an epoxy resin composition into which high molecules having a number average molecular weight of 10,000 or more is mixed by 5% (by wt.) or more.

According to still another aspect of the invention, there is provided a super low temperature insulating material characterized in that a glass cloth and a polyimide resin film having a formation given as follows are arranged through an epoxy resin composition into which high molecules having a number average molecular weight of 10,000 or more is mixed by 5% (wt.) or more:

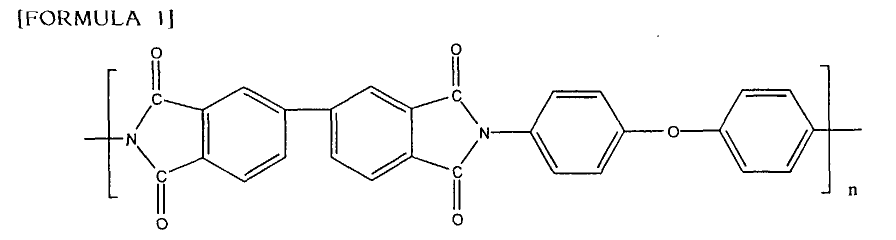

According to still another aspect of the invention, there is provided a super low temperature insulating material characterized in that a polyimide resin film having a formation given as follows is bonded to a glass cloth prepreg formed by impregnating a glass cloth with an epoxy resin composition into which high molecules having a number average molecular weight of 10,000 or more is mixed by 5% (by wt.) or more:

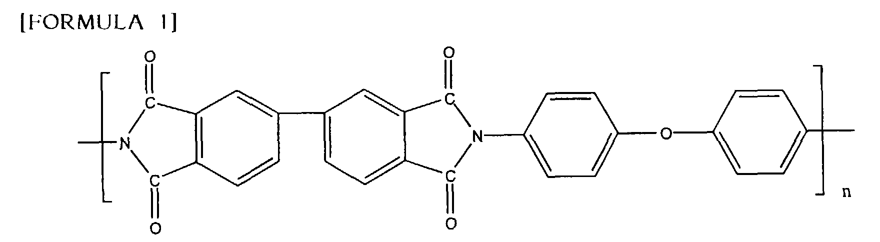

In the supper low temperature insulating material according to any one of the foregoing features, the epoxy resin composition is mixed into the insulating material by 30 to 60% (by wt.).

Also, in the supper low temperature insulating material according to any one of the foregoing features, the high molecules having a number average molecular weight of 10,000 or more comprises a polyvinyl formal resin.

Also, in the supper low temperature insulating material according to any one of the foregoing features, the high molecules having a number average molecular weight of 10,000 or more comprises a phenoxy resin.

Also, in the supper low temperature insulating material according to any one of the foregoing features, the high molecules having a number average molecular weight of 10,000 or more comprises an carboxyl NBR rubber.

In the supper low temperature insulating material according to any one of the foregoing features, the epoxy resin composition is mixed into the insulating material by 30 to 60% (by wt.), and the high molecules having a number average molecular weight of 10,000 or more comprises a polyvinyl formal resin.

Also, in the supper low temperature insulating material according to any one of the foregoing features, the epoxy resin composition is mixed into the insulating material by 30 to 60% (by wt.), and the high molecules having a number average molecular weight of 10,000 or more comprises a phenoxy resin.

Also, in the supper low temperature insulating material according to any one of the foregoing features, the epoxy resin composition is mixed into the insulating material by 30 to 60% (by wt.), and the high molecules having a number average molecular weight of 10,000 or more comprises an carboxyl NBR rubber.

According to other aspect of the invention, there is provided an epoxy resin adhesive characterized in that high molecules having a number average molecular weight of 10,000 or more is mixed into an epoxy resin by 5% (wt.) or more, whereby a high adhesive force is ensured in a super low temperature condition.

According to other aspect of the invention, there is provided an epoxy resin adhesive characterized in that one selected from the group essentially consisting of a polyvinyl formal resin, a phenoxy resin and a carboxyl NBR rubber is mixed by 5% (by wt.) or more, whereby a high adhesive force is ensured in a super low temperature condition.

The repeated experimental results are summarized in the appended claims according to the present invention.

In a super low temperature insulating material characterized in that a glass cloth and a polyimide resin film are arranged through an epoxy resin composition into which high molecules having a number average molecular weight of 10,000, or more is mixed by 5% (wt.) or more, for example, in the case where it is used as an insulating material for a super conductive coil, an excellent adhesive and an excellent insulating force may be exhibited even in the super low temperature condition, and there is no peeling or cracks in the super low temperature insulating material.

With the above-described structure, the present invention provides a super low temperature insulating material and an epoxy adhesive which are excellent in practical use and which may effectively exhibit a high insulating property of the polyimide resin film while ensuring a sufficient adhesive force in the super low temperature condition.

### BRIEF DESCRIPTION OF THE DRAWINGS

In the accompanying drawings:
Fig. 1 is a perspective view illustrating the embodiment of the invention; and
Fig. 2 is a cross-sectional view illustrating the embodiment of the invention.

### DESCRIPTION OF THE PREFERRED EMBODIMENTS

The present invention will now be described with reference to the accompanying drawings.

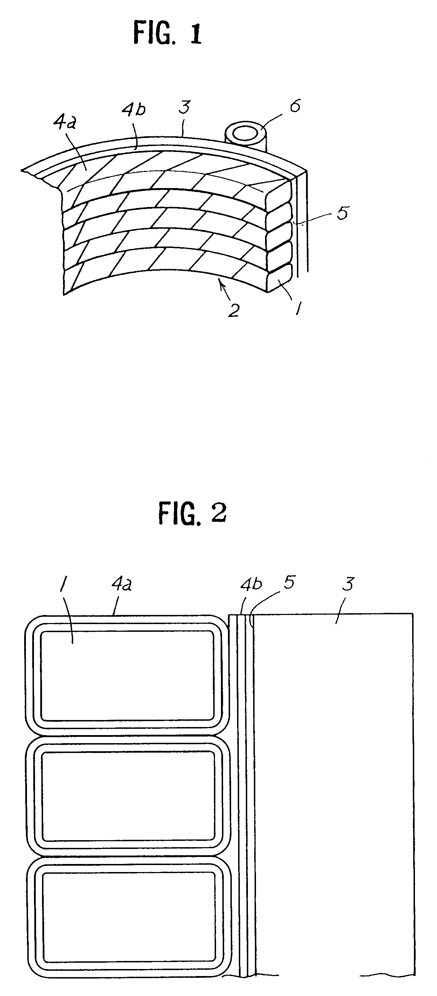

Figs. 1 and 2 show a specific embodiment of the present invention. Super low temperature insulating materials 4a and 4b are provided to a super conductive coil 2 obtained by winding a super conductive material 1 and an inner wall 5 of a cooling portion 3 for cooling the super conductive coil 2, respectively.

Also, a cooling pipe 6 for passing a coolant such as a liquefied helium for cooling the cooling portion 3 is provided to the cooling portion 3.

A method of arranging the super low temperature insulating materials 4a and 4b will now be described in greater detail.

First of all, for the super low temperature insulating material 4a arranged for the super conductive material 1, a glass cloth prepreg is formed by impregnating an epoxy resin (i.e., epoxy resin composition), to which PBH has been added, into the glass cloth. A polyimide resin film is cemented to this glass cloth prepreg to form the prepreg- like super low temperature insulating material.

Subsequently, the prepreg-like super low temperature insulating material is spirally wound around the super conductive material 1 to form a prepreg-like insulating layer on the super conductive material 1.

On the other hand, first of all, for the super low temperature insulating material 4b arranged on the inner wall 5 of the cooling portion 3, a glass cloth prepreg is formed by impregnating an epoxy resin (i.e., epoxy resin composition), to which PBH has been added, into the glass cloth. A polyimide resin film is cemented to this glass cloth prepreg and a glass cloth prepreg is further cemented to the polyimide resin film to form the prepreg-like super low temperature insulating material.

Subsequently, the prepreg-like super low temperature insulating material is arranged on the inner wall 5 of the cooling portion 3 like a wall paper to thereby form the prepreg-like insulating layer on the inner wall 5 of the cooling portion 3.

The thus arranged prepreg- like insulating layer is heated and cured to form an integral structure of the super low temperature insulating materials 4a and 4b in a gap between the super conductive material 1 and the cooling portion 3.

Since the embodiment of the invention is constructed as described above, any crack or peeling is not generated in the super low temperature insulating materials 4a and 4b in the gap between the super conductive material 1 and the cooling portion 3. It is possible to obtain the super low temperature insulating material which is excellent in practical property and in which any quench phenomenon is not generated in the super conducive coil.

### Examples

Experimental examples for supporting the advantage of the present invention will now be described.

UPILEX R made by Ube Corporation (see the following FORMULA 1. An average tensile elongation of 130% at a room temperature: hereinafter referred to as UPILEX R) was used as a polyimide resin film having a tensile elongation of 80 to 160% at a room temperature for the polyimide resin film. For comparison, UPILEX S made by Ube Corporation (see the following FORMULA 2: hereinafter referred to as UPILEX S) having an average tensile elongation of 30% at a room temperature, and KAPTON H made by Du Pont (see the following FORMULA 3: hereinafter referred to as KAPTON H) having an average tensile elongation of 70% at a room temperature were used.

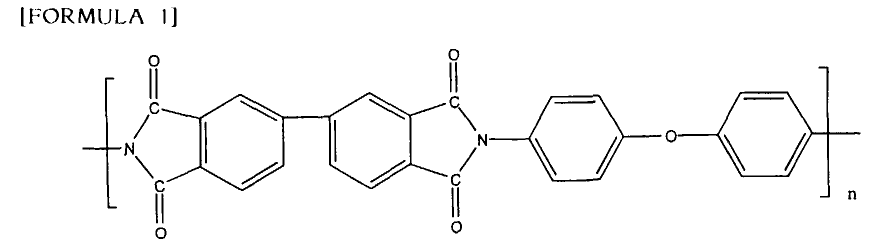

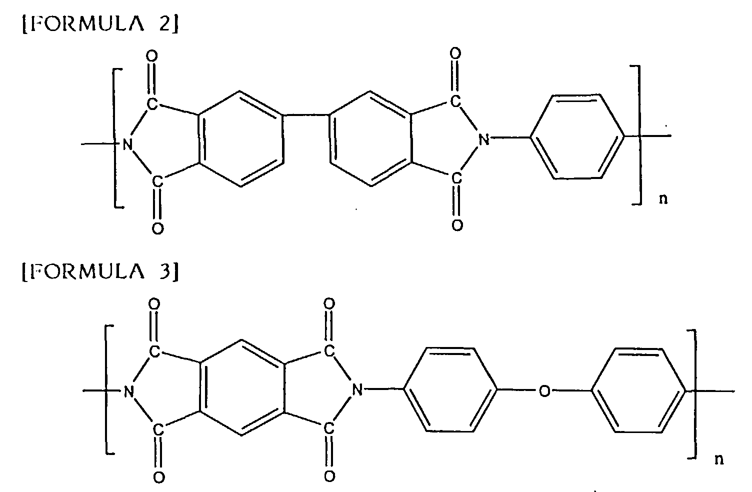

Used as a high molecule having a number average molecular weight of 10,000 or more were Vinylec E made by Chisso Corp. as a polyvinyl formal resin (see the following FORMULA 4: polyvinyl formal resin having a number average molecular weight of about one million: hereinafter referred to as PBH), YP-50 made by Toto Chemical Co., Ltd. as a phenoxy resin (see the following FORMULA 5: a number average molecular weight of 58,600: hereinafter referred to as a phenoxy resin), and Nippole 1072 made by Nippon Zeon Co., Ltd. as a carboxylic NBR rubber (see the following FORMULA 6: copolymer of carboxyl modified acrylonitrile/butadiene having a number average molecular weight of about 0.3 million: hereinafter referred to as a NBR rubber). 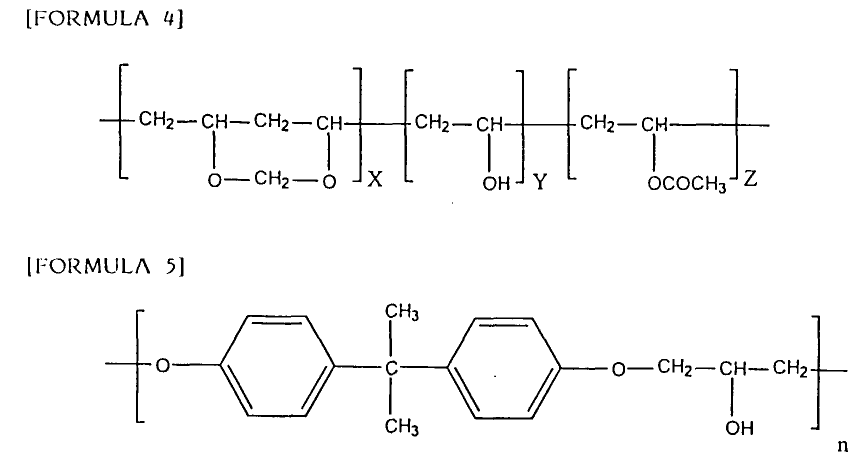 wherein n is a number of more than 100, and in the average approximately 200. 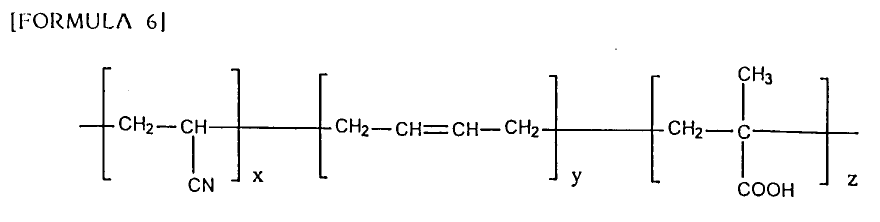 In the above formulae, the indices n, X, Y, Z, x, y and z each represent natural numbers. The mentioned indices with the exception of n indicate an interminglement ratio of the structural formulae bracketed with each square bracket. The interminglement ratio of the indices X, Y, and Z in the formula 4 is generally as follows:
X = more than 78%
Y = 4,5 to 8,5%
Z = 9 to 13%
The interminglement ratio of the indices x, y and z in the formula 6 is generally as follows:
x = 1 to 40%
y = 52 to 98%
z = 1 to 8%

Also, the measurement condition of the adhesive force was based upon JIS K 6850. Incidentally, an adhered member was SUS 304. The shearing fracture force between the adhered member and the insulating material was used as the adhesive force. It should be noted that the temperature condition was a liquefied nitrogen temperature (about 77K or less). Also, the measurement condition for the withstand voltage was based upon JIS K 6911.

### Example 1

In order to inspect the relationship between the resin content and the adhesive force of the epoxy resin composition, the epoxy resin (i.e., epoxy resin composition) to which high molecules were added was impregnated into the glass cloth by changing the resin content, thereby form the glass cloth prepreg. The adhesive force and the withstand voltage of the glass cloth prepreg were measured. Incidentally, a thickness of the glass cloth prepreg was 50 µm, and the used high molecules were PBH.

**Table 1**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 20 | PBH | 30 | 45 | 15 |
| 2 | 30 | " | " | 65 | 16 |
| 3 | 40 | " | " | 59 | 21 |
| 4 | 50 | " | " | 53 | 20 |
| 5 | 60 | " | " | 30 | 22 |
| 6 | 70 | " | " | 20 | 20 |

Thus, the adhesive force of the glass cloth prepregs of the resin content in the range of 20 to 60% (by wt.) was 30 MPa or more. Good adhesive forces were exhibited. Incidentally, the withstand voltage took a low level in comparison with the structure using the polyimide resin film.

### Example 2

In order to inspect the relationship between the additive rate of the high molecules and the adhesive force of the epoxy resin composition, the epoxy resin (i.e., epoxy resin composition) to which high molecules were added was impregnated into the glass cloth by changing the high molecular additive rate, thereby form the glass cloth prepreg. The adhesive force and the withstand voltage of the glass prepreg were measured. Incidentally, a thickness of the glass cloth prepreg was 50 µm, and the used high molecules were PBH.

**Table 2**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 40 | no polymer | | 20 | 21 |
| 2 | " | PBH | 5 | 45 | 19 |
| 3 | " | " | 10 | 45 | 21 |
| 4 | " | " | 15 | 50 | 21 |
| 5 | " | " | 20 | 53 | 20 |
| 6 | " | " | 25 | 54 | 19 |
| 7 | " | " | 30 | 59 | 21 |
| 8 | " | " | 35 | 53 | 21 |

Thus, the adhesive force of the epoxy resin composition of the high molecule additive rate in the range of 5 to 35% (by wt.) was 30 MPa or more. Good adhesive forces were exhibited. Incidentally, when the high molecule additive rate exceeded 40% (by wt.), it was impossible to impregnate the high molecules into the glass cloth and it was impossible to form the glass prepreg.

### Example 3

In order to inspect the relationship between the resin content and the adhesive force of the insulating material having a structure in which the glass cloth and the polyimide resin film were cemented to each other, the epoxy resin (i.e., epoxy resin composition) to which high molecules were added was impregnated into the glass cloth by changing the resin content, thereby form the glass cloth prepreg. UPILEX R was cemented to the glass cloth prepreg to form the insulating material. The adhesive force and the withstand voltage of the insulating material were measured. Incidentally, a thickness of the glass cloth was 30 µm, a thickness of the polyimide resin film was 25 µm and the used high molecules were PBH.

**Table 3**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 20 | PBH | 30 | 8 | impossible to measure |
| 2 | 30 | " | " | 42 | 89 |
| 3 | 40 | " | " | 45 | 98 |
| 4 | 50 | " | " | 40 | 87 |
| 5 | 60 | " | " | 32 | 93 |
| 6 | 70 | " | " | 18 | 88 |

Thus, the adhesive force of the glass cloth prepregs of the resin content in the range of 20 to 60% (by wt.) was 30 MPa or more. Good adhesive forces were exhibited. Also, with respect to the withstand voltage, it was about four times greater than that of Example 1. The withstand voltage was sufficient.

### Example 4

In order to inspect the relationship between the additive rate of the high molecules and the adhesive force of the insulating material having a structure in which the glass cloth and the polyimide resin film were cemented to each other, the epoxy resin (i.e., epoxy resin composition) to which high molecules were added was impregnated into the glass cloth by changing the high molecular additive rate, thereby form the glass cloth prepreg. UPILEX R was cemented to the glass cloth prepreg to form the insulating material. The adhesive force and the withstand voltage of the insulating material were measured. Incidentally, a thickness of the glass cloth was 30 µm, a thickness of the polyimide resin film was 25 µm and the used high molecules were PBH.

**Table 4**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 40 | no polymer | | 11 | 92 |
| 2 | " | PBH | 5 | 23 | 87 |
| 3 | " | " | 10 | 30 | 91 |
| 4 | " | " | 15 | 33 | 85 |
| 5 | " | " | 20 | 35 | 90 |
| 6 | " | " | 25 | 38 | 84 |
| 7 | " | " | 30 | 45 | 98 |
| 8 | " | " | 35 | 40 | 91 |

Thus, the adhesive force of the epoxy resin composition of the high molecule additive rate in the range of 10 to 35% (by wt.) was 30 MPa or more. Good adhesive forces were exhibited. Also, with respect to the withstand voltage, it was good because it was about four times greater than that of Example 1. Incidentally, when the high molecule additive rate exceeded 40% (by wt.), it was impossible to form the glass prepreg in the same manner as in Example 2.

### Example 5

In order to inspect the change of the adhesive force and the withstand voltage in accordance with a high molecule to be used in Example 4, the adhesive force and the withstand voltage of the insulating materials to which a phenoxy resin and an NBR rubber were added as the high molecule instead of PBH were measured. Incidentally, the used condition other than the high molecule was the same as that of Example 4.

**Table 5**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 40 | phenoxy | 5 | 22 | 90 |
| 2 | " | " | 15 | 32 | 93 |
| 3 | " | " | 30 | 42 | 89 |
| 4 | " | NBR rubber | 5 | 20 | 87 |
| 5 | " | " | 15 | 35 | 90 |
| 6 | " | " | 30 | 25 | 85 |

Thus, the insulating material to which the phenoxy resin was added exhibited the adhesive force and the withstand voltage like those of PBH. However, the adhesive force of the insulating material to which the NBR rubber was added was 30 MPa or less and insufficient at the high molecule additive rate of 30% (by wt.). Accordingly, it was found out that the addition of the NBR rubber was impossible to obtain the adhesive force to the level of the PBH or the phenoxy resin.

The reason for this would be inferred as follows. The elongation property of the adhesive is remarkably reduced at a super low temperature so that it is impossible to moderate the stress caused by a shrinkage difference between the adhered member and the adhesive. As a result, a crack, peeling or the like is generated in the adhesive or in the adhesion interface. In addition, the molecular formation of the PBH or the phenoxy resin is more likely to be elongated than that of the NBR rubber. The elongation property of the PBH or the phenoxy resin is higher than that of the NBR rubber at a super low temperature. It is therefore easier to compensate for the degradation of the elongation property of the epoxy resin.

### Example 6

In order to inspect the change of the adhesive force and the withstand voltage of the insulating material in accordance with a thickness of the polyimide resin film and the glass cloth, the resin content and the high molecule additive rate were kept constant. The adhesive force and the withstand voltage of the insulating materials having the structure in which the film and the glass cloth were cemented each other and the thickness of the polyimide resin film and the thickness of the glass cloth prepreg were changed were measured. Incidentally, the used high molecule was PBH with the high molecule additive rate of 30% (by wt.). Also, the resin content of the epoxy resin was 40% (by wt.).

**Table 6**

| No. | thickness of glass cloth (µm) | polyimide resin film | | physical characteristics | |
|---|---|---|---|---|---|
| | | kind | thickness (µm) | adhesive force (MPa) | withstand voltage(kV/mm) |
| 1 | 30 | UPILEX R | 12.5 | 45 | 89 |
| 2 | " | " | 25 | 45 | 98 |
| 3 | " | " | 50 | 42 | 83 |
| 4 | " | " | 100 | 45 | 81 |
| 5 | 50 | " | 25 | 44 | 80 |
| 6 | 70 | " | 25 | 44 | 70 |
| 7 | 90 | " | 25 | 42 | 63 |

It was thus confirmed that even if the thickness of the polyimide resin film and the glass cloth was changed, there was almost no adverse affect to the adhesive force of the insulating material.

Incidentally, the reason why, if the thickness of the glass cloth is increased, the withstand voltage is lowered is that the withstand voltage of the laminated glass cloth is lower than that of the polyimide resin film, and if the same thickness is used, the withstand voltage is lowered in the insulating material as a whole. Accordingly, if the polyimide resin film is cemented to a thin glass cloth, it is possible to obtain an insulating material which is thin but high in withstand voltage.

### Example 7

In order to inspect the change of the adhesive force and the withstand voltage of the insulating materials having the insulating material in accordance with an elongation of the polyimide resin, the adhesive force and the withstand voltage of the insulating materials having the structure in which UPILEX S and KAPTON H were used as the polyimide resin film and the glass cloth was cemented thereto were measured. Incidentally, a thickness of the glass cloth was 30 µm.

**Table 7**

| No. | polyimide resin film | | resin weight content (%) | added high molecules | | physical characteristics | |
|---|---|---|---|---|---|---|---|
| | kind | thickness (µm) | | kind | additive rate(%) | adhesive force(MPa) | withstand voltage(kV/mm) |
| 1 | UPILEX S | 25 | 40 | no additive | | 9 | 92 |
| 2 | " | " | 40 | PBH | 30 | 24 | 87 |
| 3 | " | " | 60 | " | " | 16 | 85 |
| 4 | " | " | 40 | phenoxy | " | 21 | 89 |
| 5 | " | " | 60 | " | " | 12 | 87 |
| 6 | " | " | 40 | NBR rubber | " | 18 | 90 |
| 7 | " | " | 60 | " | " | 10 | 89 |
| 8 | KAPTON H | " | 40 | no additive | | 8 | 91 |
| 9 | " | " | 40 | PBH | 30 | 33 | 94 |
| 10 | " | " | 60 | " | " | 25 | 95 |
| 11 | " | " | 40 | phenoxy | " | 31 | 91 |
| 12 | " | " | 60 | " | " | 23 | 96 |
| 13 | " | " | 40 | NBR rubber | " | 26 | 92 |
| 14 | " | " | 60 | " | " | 20 | 97 |

Thus, the adhesive force of the insulating material using the polyimide resin film having a low elongation was lower than that of the insulating material using the polyimide resin film having a high elongation. Incidentally, with respect to UPILEX S having a lower elongation, the adhesive force thereof was insufficient at 30 MPa or less no matter what resin content or no matter what kind of high molecules additive rate were set.

This is inferred as follows. In the same manner as in Example 5, UPILEX R has a higher elongation than that of UPILEX S or KAPTON H, and under the condition of a super low temperature, even if the elongation of the epoxy resin is lowered, the part of the stress may be moderated by UPILEX R per se.

### Example 8

In order to inspect the relationship between the resin content and the adhesive force of the insulating material having a structure in which the two glass cloth prepregs and the polyimide resin film were cemented to each other, the epoxy resin (i.e., epoxy resin composition) to which high molecules were added was impregnated into the glass cloth by changing the resin content, thereby form the glass cloth prepreg. The polyimide resin film was cemented to the glass cloth prepreg to form the insulating material. The glass cloth prepreg was further cemented to the polyimide resin film. The adhesive force and the withstand voltage of the insulating material were measured. Incidentally, a thickness of the glass cloths was 50 µm x 2=100 µm, a thickness of the polyimide resin film was 25 µm and the used high molecules were PBH.

**Table 8**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 20 | PBH | 20 | 9 | impossible to measure |
| 2 | 30 | " | " | 51 | 60 |
| 3 | 40 | " | " | 53 | 61 |
| 4 | 50 | " | " | 48 | 65 |
| 5 | 60 | " | " | 35 | 68 |
| 6 | 70 | " | " | 15 | 69 |

Thus, the adhesive force of the insulating material of the resin content in the range of 30 to 60% (by wt.) was 30 MPa or more. Good adhesive forces were exhibited. Also, with respect to the withstand voltage, it was about three times greater than that of Example 1. The withstand voltage was sufficient.

### Example 9

In order to inspect the relationship between the high molecule additive rate and the adhesive force of the insulating material having a structure in which the two glass cloth prepregs and the polyimide resin film were cemented to each other, the epoxy resin (i.e., epoxy resin composition) to which high molecules were added was impregnated into the glass cloth by changing the high molecule additive rate, thereby form the glass cloth prepreg. The polyimide resin film was cemented to the glass cloth prepreg to form the insulating material. The glass cloth prepreg was further cemented to the polyimide resin film. The adhesive force and the withstand voltage of the insulating material were measured. Incidentally, a thickness of the glass cloths was 50 µm x 2=100 µm, a thickness of the polyimide resin film was 25 µm and the used high molecules were PBH.

**Table 9**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 40 | no additive | | 13 | 60 |
| 2 | " | PBH | 5 | 25 | 61 |
| 3 | " | " | 10 | 47 | 63 |
| 4 | " | " | 15 | 50 | 61 |
| 5 | " | " | 20 | 53 | 61 |
| 6 | " | " | 25 | 49 | 62 |
| 7 | " | " | 30 | 49 | 60 |

Thus, the adhesive force of the insulating material using an epoxy resin composition of the high molecule additive rate in the range of 10 to 30% (by wt.) was 30 MPa or more. Good adhesive forces were exhibited. Also, with respect to the withstand voltage, it was about three times greater than that of Example 1. The withstand voltage was sufficient. Incidentally, if the high molecule additive rate was 40% (by wt.), it was impossible to form the prepreg in the same manner as in Examples 2 and 4.

### Example 10

In order to inspect the change of the adhesive force and the withstand voltage in accordance with a high molecule to be used in Example 9, the adhesive force and the withstand voltage of the insulating materials to which a phenoxy resin and an NBR rubber were added as the high molecule instead of PBH were measured. Incidentally, the used condition other than the molecule was the same as that of Example 9.

**Table 10**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 40 | phenoxy | 5 | 23 | 60 |
| 2 | 40 | " | 20 | 53 | 59 |
| 3 | 40 | " | 30 | 47 | 57 |
| 4 | 40 | NBR rubber | 5 | 20 | 57 |
| 5 | 40 | " | 20 | 40 | 61 |
| 6 | 40 | " | 30 | 35 | 57 |

Thus, the insulating material to which the phenoxy resin was added exhibited the adhesive force and the withstand voltage like those of PBH. However, the adhesive force of the insulating material to which the NBR rubber was added was somewhat reduced in a range where there was no practical problem in comparison with the case of PBH or phenoxy resin.

The reason for this would be inferred as follows. In the same manner as in Example 5, the elongation property of the adhesive is remarkably reduced at a super low temperature so that it is impossible to moderate the stress such as displacement caused by a shrinkage difference between the adhered member and the adhesive. As a result, a crack, peeling or the like is generated in the adhesive or in the adhesion interface. In addition, the molecular formation of the PBH or the phenoxy resin is more likely to be elongated than that of the NBR rubber. The elongation property of the PBH or the phenoxy resin is higher than that of the NBR rubber. It is therefore much easier to compensate for the reduction of the degradation of the elongation property of the epoxy resin.

### Example 11

In order to inspect the change of the adhesive force and the withstand voltage of the insulating material in accordance with a thickness of the polyimide resin film and the two glass cloths, the resin content and the high molecule additive rate were kept constant. The adhesive force and the withstand voltage of the insulating material having the structure in which the film and the two glass cloth were cemented each other and the thickness of the polyimide resin film and the thickness of the glass cloth prepreg were changed were measured. Incidentally, the thickness of the glass cloths corresponded to the double thickness, and the used high molecule was PBH with the high molecule additive rate of 30% (by wt.). Also, the resin content of the epoxy resin was 40% (by wt.).

**Table 11**

| No. | thickness of glass cloth (µm) | polyimide resin film | | physical characteristics | |
|---|---|---|---|---|---|
| | | kind | thickness (µm) | adhesive force (MPa) | withstand voltage(kV/mm) |
| 1 | 50 | UPILEX R | 12.5 | 55 | 65 |
| 2 | " | " | 25 | 53 | 59 |
| 3 | " | " | 50 | 53 | 57 |
| 4 | " | " | 100 | 55 | 57 |
| 5 | 30 | " | 25 | 55 | 82 |
| 6 | 50 | " | 25 | 53 | 59 |
| 7 | 70 | " | 25 | 51 | 47 |
| 8 | 90 | " | 25 | 48 | 40 |

It was thus confirmed that even if the thickness of the polyimide resin film and the glass cloth was changed, there was almost no adverse affect to the adhesive force of the insulating material. Incidentally, in the same manner as in Example 6, when the thickness of the glass cloths was increased, the withstand voltage was reduced.

### Example 12

In order to inspect the change of the adhesive force and the withstand voltage of the insulating material in accordance with an elongation of the polyimide resin, the adhesive force and the withstand voltage of the insulating material having the structure in which UPILEX S and KAPTON H were used as the polyimide resin film and the two glass cloth prepregs were cemented thereto were measured. Incidentally, a thickness of the glass cloths was 50 µm x 2= 100 µm.

**Table 12**

| No. | polyimide resin film | | resin weight content (%) | added high molecules | | physical characteristics | |
|---|---|---|---|---|---|---|---|
| | kind | thickness (µm) | | kind | additive rate(%) | adhesive force(MPa) | withstand voltage(kV/mm) |
| 1 | UPILEX S | 25 | 40 | no additive | | 7 | 58 |
| 2 | " | " | 40 | PBH | 20 | 29 | 61 |
| 3 | " | " | 60 | " | " | 15 | 65 |
| 4 | " | " | 40 | phenoxy | " | 25 | 59 |
| 5 | " | " | 60 | " | " | 17 | 66 |
| 6 | " | " | 40 | NBR rubber | " | 18 | 60 |
| 7 | " | " | 60 | " | " | 12 | 68 |
| 8 | KAPTON H | " | 40 | no additive | | 7 | 58 |
| 9 | " | " | 40 | PBH | 20 | 31 | 60 |
| 10 | " | " | 60 | " | " | 25 | 63 |
| 11 | " | " | 40 | phenoxy | " | 33 | 61 |
| 12 | " | " | 60 | " | " | 25 | 61 |
| 13 | " | " | 40 | NBR rubber | " | 27 | 57 |
| 14 | " | " | 60 | " | " | 18 | 61 |

Thus, the adhesive force of the insulating material using the polyimide resin film such as UPILEX S and KAPTON H having a low elongation was lower than that of the insulating material using the polyimide film such as UPILEX R having a high elongation. Incidentally, with respect to UPILEX S having a lower elongation, the adhesive force thereof was insufficient at 30 MPa or less no matter what kind of high molecules additive rate or no matter what resin content were set.

### Example 13

An epoxy resin composition to which a high molecule was added was impregnated into the polyimide resin film that was poor in adhesivity with a conductive material to form a prepreg. Then, the adhesive force and the withstand voltage were measured. Incidentally, UPILEX R was used as a polyimide resin film. A thickness of the polyimide resin film was set at 50 µm.

**Table 13**

| No. | resin weight content (%) | added high molecules | | physical characteristics | |
|---|---|---|---|---|---|
| | | kind | additive rate (%) | adhesive force (MPa) | withstand voltage(kV/mm) |
| 1 | 5 | PBH | 30 | 40 | 203 |
| 2 | 20 | " | " | 43 | 191 |
| 3 | 30 | " | " | 42 | 170 |

Thus, at the high molecule additive rate of 30% (by wt.) and in the resin content range of 5 to 30% (by wt.), the adhesive force of the polyimide resin film prepreg was 30 MPa or more. The good adhesive was exhibited. Incidentally, the withstand voltage was about ten times higher than that of the glass cloth.

The foregoing experimental results suggests that if UPILEX R having a high elongation is used as a polyimide resin film, an epoxy resin having an inherently high adhesive force is used as an adhesive, and further high molecules have a large molecular weight and a high elongation are contained, it is possible to be a super low insulating material having a good adhesive force even in the super low temperature condition.

To summarize the above-described experimental results:
i) The super low insulating material obtained by arranging the glass cloth and the polyimide resin film through the epoxy resin composition into which the high molecules having a number average molecular weight of 10,000 or more is mixed into by 5% (wt.) exhibits a sufficient adhesive force and insulating property even at a super low temperature.
ii) If the polyimide resin film having an elongation of 80 to 160% at a room temperature is used as a polyimide resin film, the adhesive force may be further increased.
iii) If the high molecules (polyvinyl formal resin or phenoxy resin) having a high elongation at a super low temperature is used as high molecules, the adhesive force may be further increased. However, even if a carboxyl NBR rubber having a somewhat lower elongation is used, there is no problem in practical use.
iv) If the epoxy resin composition is mixed into the insulating material by 30 to 60% (by wt.), the adhesive force is further increased.
v) The epoxy resin composition that meets the above-described conditions may impart a larger adhesive force also to a polyimide resin film having a small adhesive force.

Various details of the invention may be changed without departing from its spirit nor its scope. Furthermore, the foregoing description of the embodiments according to the present invention is provided for the purpose of illustration only, and not for the purpose of limiting the invention as defined by the appended claims and their equivalents.

## Claims

1. A super low temperature insulating material characterized in that a glass cloth and a polyimide resin film are arranged through an epoxy resin composition into which high molecules having a number average molecular weight of 10,000 or more is mixed by 5% (wt.) or more.

2. A super low temperature insulating material characterized in that a polyimide resin film is bonded to a glass cloth prepreg formed by impregnating a glass cloth with an epoxy resin composition into which high molecules having a number average molecular weight of 10,000 or more is mixed by 5% (by wt.) or more.

3. A super low temperature insulating material characterized in that a glass cloth and a polyimide resin film having a tensile elongation of 80 to 160% at a room temperature are arranged through an epoxy resin composition into which high molecules having a number average molecular weight of 10,000 or more is mixed by 5% (wt.) or more.

4. A super low temperature insulating material characterized in that a polyimide resin film having a tensile elongation of 80 to 160% at a room temperature is bonded to a glass cloth prepreg formed by impregnating a glass cloth with an epoxy resin composition into which high molecules having a number average molecular weight of 10,000 or more is mixed by 5% (by wt.) or more.

5. A super low temperature insulating material characterized in that a glass cloth and a polyimide resin film having a formation given as follows are arranged through an epoxy resin composition into which high molecules having a number average molecular weight of 10,000 or more is mixed by 5% (wt.) or more:

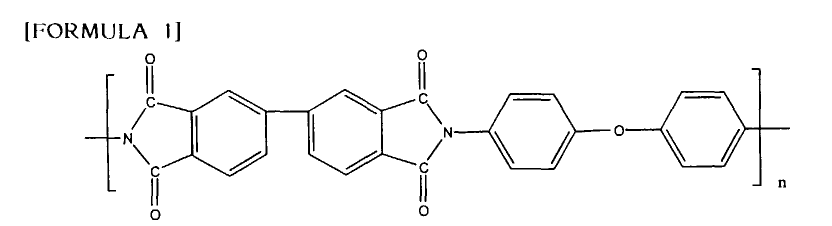

6. A super low temperature insulating material characterized in that a polyimide resin film having a formation given as follows is bonded to a glass cloth prepreg formed by impregnating a glass cloth with an epoxy resin composition in to which high molecules having a number average molecular weight of 10,000 or more is mixed by 5% (by wt.) or more:

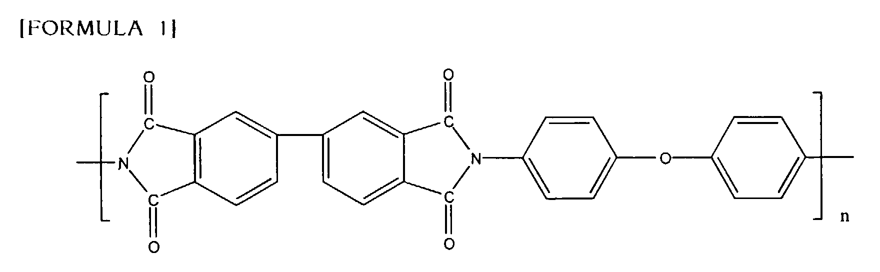

7. The super low temperature insulating material according to any one of claims 1 to 6, wherein the epoxy resin composition is mixed into the insulating material by 30 to 60% (by wt.).

8. The supper low temperature insulating material according to any one of claims 1 to 6, wherein the high molecules having a number average molecular weight of 10,000 or more comprises a polyvinyl formal resin.

9. The supper low temperature insulating material according to any one of claims 1 to 6, wherein the high molecules having a number average molecular weight of 10,000 or more comprises a phenoxy resin.

10. The supper low temperature insulating material according to any one of claims 1 to 6, wherein the high molecules having a number average molecular weight of 10,000 or more comprises a carboxyl NBR rubber.

11. The super low temperature insulating material according to any one of claims 1 to 6, wherein the epoxy resin composition is mixed into the insulating material by 30 to 60% (by wt.), and the high molecules having a number average molecular weight of 10,000 or more comprises a polyvinyl formal resin.

12. The super low temperature insulating material according to any one of claims 1 to 6, wherein the epoxy resin composition is mixed into the insulating material by 30 to 60% (by wt.), and the high molecules having a number average molecular weight of 10,000 or more comprises a phenoxy resin.

13. The super low temperature insulating material according to any one of claims 1 to 6, wherein the epoxy resin composition is mixed into the insulating material by 30 to 60% (by wt.), and the high molecules having a number average molecular weight of 10,000 or more comprises a carboxyl NBR rubber.

14. An epoxy resin adhesive characterized in that high molecules having a number average molecular weight of 10,000 or more is mixed into an epoxy resin by 5% (wt.) or more, whereby a high adhesive force is ensured in a super low temperature condition.

15. An epoxy resin adhesive characterized in that one selected from the group essentially consisting of a polyvinyl formal resin, a phenoxy resin and a carboxyl NBR rubber is mixed by 5% (by wt.) or more, whereby a high adhesive force is ensured in a super low temperature condition.
